# EUROPÄISCHE PATENTSCHRIFT

(11) **EP 1 845 123 B1**
(45) Veröffentlichungstag und Bekanntmachung des Hinweises auf die Patenterteilung: **17.03.2010**
(21) Anmeldenummer: 06007399.6
(22) Anmeldetag: 07.04.2006
(51) Int. Cl.: C08G 69/26, G02B 1/04

(54) **Transparente, amorphe Polyamidformmassen und deren Verwendung**
transparent, amorphous polyamide molding compositions and their use
composition de moulage transparente et amorphe à base de polyamide et leur utilisation

(43) Veröffentlichungstag der Anmeldung: 17.10.2007
(73) Patentinhaber: EMS-CHEMIE AG, 7013 Domat-Ems (CH)
(72) Erfinder: Bühler, Friedrich Severin, Dr., 7430, Thusis (CH); Hala, Ralf, 88161 Lindenberg (DE)
(74) Vertreter: Pfenning, Meinig & Partner GbR

(56) Entgegenhaltungen:
- US-A- 3 839 299
- US-A1- 2003 235 666

## Beschreibung

Die Erfindung betrifft transparente, amorphe Polyamidformmassen, die sich durch eine ausgezeichnete Verarbeitungsfähigkeit, große Flexibilität und eine geringe Dichte auszeichnen. Mit den transparenten, amorphen Polyamidformmassen nach der Erfindung lassen sich hochtransparente Formkörper herstellen, die zudem ausgezeichnete mechanische Eigenschaften, eine hohe Chemikalienresistenz, niedriges Gewicht und Schwimmfähigkeit in Süßwasser aufweisen.

Die transparenten, amorphen Polyamidformmassen nach der Erfindung werden erhalten durch Polykondensation von aliphatischen Dicarbonsäuren mit 17 bis 21 C-Atomen und bis(3-methyl-4-amino-cyclohexyl)methan (MACM) als Diaminkomponente. Die Erfindung betrifft weiterhin die Verwendung der transparenten, amorphen Polyamidformmassen zur Herstellung von transparenten Formkörpern, insbesondere zur Herstellung von korrigierenden Linsen, nicht korrigierenden Linsen oder Sonnenlinsen für Brillen, Brillenbügel, Brillenfassungen, Schutzbrillen, Visieren, Schutzhelmen oder Augenschutz aller Art, sowie Displays oder Gehäusen.

Transparente, amorphe Polyamidformmassen und daraus herstellbare transparente, amorphe Polyamidformkörper sind im Stand der Technik bekannt. Grundsätzlich werden dabei im Bereich der transparenten Polyamide zwei Polymertypen unterschieden, und zwar zum einen mikrokristalline transparente Polyamide sowie amorphe, transparente Polyamide.

Mikrokristalline transparente Polyamidformmassen und daraus herstellbare optische transparente Formkörper sind z.B. aus der DE 43 10 970 A1 bekannt. Die dort beschriebenen Polyamide werden aus bis (4-amino-cyclohexyl)methan (PACM) als Diaminkomponente und linearen Dicarbonsäuren, z.B. Dodecandisäure als Säurekomponente hergestellt.

Amorphe transparente Polyamidformmassen sind z.B. in der EP 0 837 087 B1 offenbart. Der vorstehend erwähnten europäischen Patentanmeldung ist u.a. die Herstellung von transparenten Linsen aus bis(3-methyl-4-amino-cyclohexyl)methan (MACM) und Dodecandisäure zu entnehmen.

In der EP 1 595 907 A1 sind weiterhin transparente, amorphe Polyamide beschrieben, die aus MACM und einer C14-Dicarbonsäure herstellbar sind.

Es hat sich nun gezeigt, dass jedoch die vorbekannten transparenten Polyamidformmassen Nachteile aufweisen. Es hat sich insbesondere herausgestellt, dass die Verarbeitungsfähigkeit der transparenten amorphen Polyamidformmassen zu transparenten Formkörpern nicht immer befriedigend ist. Bei der Herstellung von Formkörpern ist es nämlich wichtig, dass die Polyamidformmasse eine möglichst hohe Fließfähigkeit aufweist, sodass damit problemlos das Granulat zu transparenten Formkörpern mit guten Eigenschaften verarbeitet werden kann. Wesentlich dabei ist, dass auch unter Berücksichtigung einer ausgezeichneten Verarbeitungsfähigkeit, d.h. einer hohen Fließfähigkeit der Polyamidformmassen, die mechanischen Eigenschaften der hergestellten transparenten Formkörpern trotzdem nicht beeinträchtigt werden. Wesentlich für transparente Formkörper aus amorphen Polyamiden ist weiterhin, dass sie eine möglichst hohe Transparenz aufweisen. Diesen Forderungen, in ihrer Gesamtheit, haben die bisher bekannten Polyamidformmassen nicht entsprochen.

Ausgehend hiervon ist es deshalb die Aufgabe der vorliegenden Erfindung, eine transparente Polyamidformmasse anzugeben, mit der transparente Formkörper herstellbar sind, wobei eine möglichst hohe Fließfähigkeit der Polyamidformmasse gefordert ist und wobei gleichzeitig der Formkörper ausgezeichnete mechanische Eigenschaften und eine möglichst hohe Transparenz aufweisen soll.

Diese Aufgabe wird durch die Merkmale des Patentanspruchs 1 gelöst. Die abhängigen Unteransprüche zeigen vorteilhafte Weiterbildungen auf.

Erfindungsgemäß wird somit eine transparente, amorphe Polyamidformmasse vorgeschlagen, die aus spezifisch ausgewählten Edukten, nämlich aus bis(3-methyl-4-amino-cyclohexyl)methan (MACM) als Diamin und aliphatischen Dicarbonsäuren mit 17 bis 21 C-Atomen aufgebaut ist.

Die aliphatischen Dicarbonsäuren können dabei technisch oder biotechnisch hergestellt sein.

Es hat sich nun gezeigt, dass nur bei Auswahl dieser spezifischen Komponenten transparente, amorphe Polyamidformmassen erhalten werden, die Eigenschaften aufweisen, die in ihrer Gesamtheit gegenüber den im Stand der Technik bekannten Formmassen deutlich überlegen sind.

Die Erfindung umfasst dabei auch Mischungen, d.h. Blends, der vorstehend beschriebenen erfindungsgemäßen Polyamidformmassen in beliebigen Mischungsverhältnissen.

Besonders hervorzuheben ist die ausgezeichnete Fließfähigkeit, die bestimmt in einem Spiraltest, gegenüber denen, wie sie im Stand der Technik bekannt sind, deutlich erhöht ist. Bei den erfindungsgemäßen amorphen Polyamidformmassen ist weiterhin zu betonen, dass neben der ausgezeichneten Verarbeitungsfähigkeit die Polyamidformmasse eine Lichttransmission von größer 90 %, bevorzugt größer 93 % aufweist, wenn das Polyamid in Form einer Platte, z. B. einer Rundplatte, mit einer Dicke von 2 mm vorliegt. Derartige Rundplatten von 75 x 2 mm werden auf einer Spritzgussmaschine der Firma Arburg, Modell Allrounder 320-210-750 im polierten Werkzeug hergestellt, wobei die Zylindertemperatur zwischen 240 und 340 °C und die Werkzeugtemperatur zwischen 20 und 140 °C liegt. Die Messung der Lichttransmission wird mit dem Messgerät Haze Gard plus der Firma Byk Gardner in der CIE Lichtart C an solchen Rundplatten der Dimension 75 x 2 mm durchgeführt. Der Lichttransmissionswert wird in % der eingestrahlten Lichtmenge angegeben. Hervorzuheben ist ferner, dass die Flexibilität, die chemische Resistenz, eine reduzierte Trübung sowie weitere Eigenschaften der transparenten Formkörper der Erfindung gegenüber Formkörpern, die z.B. mit einer C12-Dicarbonsäure hergestellt worden sind, überlegen sind. Letztlich ist darauf hinzuweisen, dass auch die transparenten Formkörper nach der Erfindung eine Dichte von < 0,990 g/cm³ besitzen.

Diese geringe Dichte < 1.0 verschafft dem Material eine Schwimmfähigkeit im Süßwasser wie im Salzwasser. Dadurch bleiben Sportartikel, Brillen, Schutzeinrichtungen oder Gegenstände aller Art an der Wasseroberfläche und gehen nicht verloren. Diese Dichten liegen um mehr als 20% unter den bekannten Materialien wie PMMA oder Polycarbonat. Diese vorteilhaften Eigenschaften, wie ausgezeichnete Verarbeitungsfähigkeit, verbesserte Transparenz, reduzierte Trübung, verbesserte chemische Resistenz, erhöhte Flexibilität und reduzierte Wasseraufnahme erlauben nun Anwendungen im Bereich von korrigierenden Linsen, nicht korrigierenden Linsen oder Sonnenlinsen, Brillenbügel, Brillenfassungen, Schutzbrillen, Visieren, Schutzhelmen oder Augenschutz aller Art, sowie Displays oder Gehäusen, die wahlweise in Tauchbädern eingefärbt oder mit speziellen Schichtaufbauten veredelt werden.

Die hohe chemische Resistenz und Zähigkeit ermöglicht zudem die Verwendung in Verbindung mit aggressiven Medien, wie Flüssigkeiten oder Gasen, wie beispielsweise in Verschlüssen, insbesondere Textilverschlüssen, die chemisch gereinigt werden. Desgleichen in Gasmasken, Filtertassen, Durchflussmesser, medizinische Geräte, Filtergehäuse, Verscheibungen, Lampengehäuse, Displays für Mobiltelefone oder Spielkonsolen oder GPS-Geräte oder anderen Elektronikgeräten oder -bauteilen, wie Bildschirmen oder Bildschirmfolien.

Weitere Anwendungen sind Schutzhüllen für Lichtwellenleiter, Kabelummantelung, Lichtwellenleiter, transparente Rohre und Leitungen, z.B. für Getränke-und Lebensmitteltransport, auch in Getränkeautomaten und Anwendungen im Verpackungsbereich, z.B. für mono-oder mehrschichtige Folien und Behälter.

Durch die erhöhte Flexibilität können die Formmassen vor allem im Bereich Automobil, Luftfahrt und Transport- oder Freizeitmittel aller Art eingesetzt werden, insbesondere dort, wo die Formkörper dynamischen Schwingbelastungen ausgesetzt sind. Modische transparente Befestigungen für Snow-Board, Ski-Bindungen, Taucherflossen, Halterungen und Verschlüsse nutzen diese Vorteile. Hier ist das geringe Gewicht und die Schwimmfähigkeit in Süßwasser von besonderer Bedeutung.

Durch die hohe Flexibilität, Transparenz und Chemikalien Resistenz sind weiterhin Anwendungen, wie beispielsweise Displayschutzfolien für TFT-Bildschirme oder aktive Werbetafeln möglich. Die Herstellung kann mit Blas- oder Flachfolienanlagen oder aus Gießlösungen erfolgen.

Die besonderen Eigenschaften der Formkörper, die aus den erfindungsgemäßen Formmassen herstellbar sind, ermöglichen ferner spezielle Verarbeitungstechniken, wie Fräsen, Schleifen, Laserschneiden und bestimmte Fixiertechniken, wie Schrauben, Kleben, Schweißen. Beispielsweise nimmt die Resistenz gegen mechanische Rissbildung bei einer geschraubten Verbindung im Formteil mit zunehmender C-Länge der Dicarbonsäure zu. Die Neigung, Spannungsrisse bei Behandlung mit aggressiven Chemikalien zu bilden, nimmt dabei ab.

Die erfindungsgemäßen transparenten, amorphen Polyamidformmassen können selbstverständlich wie an und für sich im Stand der Technik schon bekannt, zusätzlich Zusatzstoffe, wie Additive und Farbstoffe enthalten, wobei allerdings bei den Additiven Vernetzungsadditive und bei den Farbstoffen photochrome Farbstoffe ausgeschlossen sind. Ansonsten umfassen die Zusatzstoffe, z.B. Stabilisatoren (Hitze- und UV-Stabilisatoren unterschiedlicher Art), Flammschutzmittel, Antistatikmittel, Weichmacher, Pigmente, Kettenregler, Schlagzähmodifikatoren und/oder Füll- und Verstärkungsstoffe, insbesondere nanoskalige Füll-und Verstärkungsstoffe, wie z.B. Minerale mit einer Partikelgröße von maximal 100 nm oder unmodifizierte oder modifizierte Phyllosilicate und weitere Zusatzstoffe enthalten können. Als Hitzestabilisatoren können beispielsweise IRANOX^{®} 1098 oder IRGANOX^{®} 1010 verwendet werden. Als UV-Stabilisatoren können beispielsweise TINUVIN^{®} 312 oder 770 bzw. NYLOSTAB^{®} SEED verwendet werden. Ein UV400 Schutz kann beispielsweise mit TINUVIN^{®} 326 oder 327 erreicht werden. Die Stabilisatoren können direkt oder als Masterbatch mit Polyamid als Trägermaterial zugegeben werden. Als optische Aufheller können beispielsweise TINOPAL^{®} DMSX oder UNIVEX^{®} OB verwendet werden. Als Gleitmittel oder Einschlussverminderer kann beispielsweise VERSA-POL^{®} verwendet werden. Diese Zusatzstoffe werden den Polyamidformmassen in an sich bekannter Weise zugegeben, z.B. in der Polykondensation oder danach in einer Extrusion.

Aus stofflicher Sicht sind bei den erfindungsgemäßen transparenten amorphen Polyamidformmassen insbesondere die mit C18-Dicarbonsäure bevorzugt. Die Erfindung umfasst allerdings auch Ausführungsformen, bei denen die Dicarbonsäure durch maximal 50 Mol-% einer aromatischen Dicarbonsäure ersetzt worden ist. Beispiele für die aromatischen Dicarbonsäuren sind Isophthalsäure, Terephthalsäure und Naphthalindicarbonsäure und/oder deren Mischungen. Ergänzend hierzu ist es auch möglich, das Diamin durch maximal 50 Mol-% bis(4-amino-cyclohexyl)methan (PACM) zu ersetzen. Wesentlich ist dabei, dass es sich in allen Fällen um ein transparentes, amorphes Polyamid handelt.

Die Erfindung wird nachfolgend anhand eines Herstellungsbeispiels und der Tabellen 1 und 2 näher erläutert.

Die Herstellung der erfindungsgemäßen Polyamide für die erfindungsgemäßen Polyamidformmassen erfolgt in an sich bekannter Weise in bekannten rührbaren Druckautoklaven mit einem Vorlagegefäß und einem Reaktionsgefäß:

Im Vorlagegefäß wird deionisiertes Wasser vorgelegt und die Monomere und Additive zugegeben. Danach wird mehrfach mit Stickstoff inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 270 bis 310 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann.

In der folgenden Entgasungsphase wird der Ansatz bei atmosphärischem Druck für 0.5 bis 1 Stunden auf einer Temperatur von 270 bis 340 °C gehalten.

Die Polymerschmelze wird in Strangform ausgetragen, im Wasserbad bei 15 bis 80 °C abgekühlt und granuliert. Das Granulat wird für 12 Stunden bei 80 bis 120 °C unter Stickstoff auf einen Wassergehalt von unter 0.06 Gew.-% getrocknet.

Die Relative Viskosität der erfindungsgemäßen Polyamide für die erfindungsgemäßen Polyamidformmassen kann, wie dem Fachmann bekannt, durch chemische und/oder verfahrenstechnische Maßnahmen eingestellt werden. Als chemische Maßnahme ist die Verwendung eines Kettenreglers möglich, wobei gilt: Wird die Menge des Kettenreglers erhöht, so sinkt die Relative Viskosität.Geeignete Kettenregler sind Monocarbonsäuren, wie Benzoesäure, Essigsäure, Propionsäure oder Monoamine, wie Stearylamin, aber auch Dicarbonsäuren oder Diamine oder Regler mit Amin- oder Carbonsäuregruppen, die Stabilisatorgruppen des Typs HALS oder des Typs tertiär-Butyl-Phenol enthalten, wie beispielsweise Triacetondiamin oder Isophthalsäure-Di-Triacetondiamin-Derivate. Regler mit einer Stabilisatorgruppe führen zu einer verbesserten Licht-/UV- bzw. Hitzestabilität des Polyamides.

Bevorzugte Regler für die erfindungsgemäßen Polyamide sind Benzoesäure, Essigsäure oder Triacetondiamin. Kettenregler werden in Konzentrationen von 20 bis 100 Mol pro Tonne Endprodukt, bevorzugt 30 bis 80 Mol pro Tonne Endprodukt, noch mehr bevorzugt 40 bis 50 Mol pro Tonne Endprodukt eingesetzt.

Verfahrenstechnische Maßnahmen beinhalten z.B. die Änderung der Dauer der Druckphase, der Dauer der Entgasungsphase, des Abstelldrehmoments oder des Temperaturprofils.

Die relative Viskosität (gemessen in 0,5 %-iger m-Kresollösung bei 20 °C) der erfindungsgemäßen Polyamide soll mindestens 1,45, bevorzugt mindestens 1,55, noch mehr bevorzugt mindestens 1,65 betragen.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate, die gleichzeitig zur Reduktion der Verfärbung während der Verarbeitung führen. Die Katalysatoren werden im Bereich von 0.005 bis 0.5 Gew.-%, bevorzugt 0.01 bis 0.1 Gew.-% zugegeben.

Geeignete Entschäumer zur Vermeidung der Schaumbildung während der Entgasung sind wässrige, 10 %-ige Emulsionen, die Silicone oder Siliconderivate enthalten und in Mengen von 0.01 bis 1.0 Gew.-%, bevorzugt 0.01 bis 0.10 Gew.-% eingesetzt werden.

### Herstellungsbeispiel

Im Folgenden wird die Herstellung einer erfindungsgemäßen Polyamidformmasse an Hand der in Beispiel Nr. 4 verwendeten Zusammensetzung erläutert:
- Im Vorlagegefäß des 130 1 Druckautoklaven werden 19,24 kg deionisiertes Wasser vorgelegt und 39,81 kg Octadecandisäure, 30,31 kg MACM, 0,10 kg Benzoesäure und 15,5 g H₃PO₂ zugegeben.
- Nach 10-maliger Inertisierung wird bis auf 230 °C aufgeheizt und die homogene Lösung durch ein Sieb in das Reaktionsgefäß gepumpt.
- Unter Rühren wird dort der Ansatz auf 295 °C aufgeheizt und 4 Stunden bei 20 bar in der Druckphase gehalten. Innerhalb von 1.5 Stunden wird auf atmosphärischen Druck entspannt und anschließend 40 Minuten entgast.
Die Polymerschmelze wird ausgetragen, im Wasserbad (65 °C) abgekühlt und granuliert. Das Granulat wird für 24 Stunden bei 100 °C unter Stickstoff auf einen Wassergehalt von unter 0.06 Gew.-% getrocknet.

Die Messungen wurden nach den folgenden Normen und an den folgenden Prüfkörpern durchgeführt.

Spiralfließtest:
Auf einer Spritzgussmaschine der Firma Arburg, Model Allrounder 320-210-750 werden die Fliessspiralen bei einer Massetemperatur von 280 °C und einer Formtemperatur von 100 °C mit maximalem Einspritzdruck (ca. 1050 bar) und 1000 bar Nachdruck hergestellt.
Die Fließspirale hat die Dimensionen Breite x Dicke x maximale Länge: 10 x 1,5 x 1000 mm. In der Spirale sind folgende Entfernungsmarken angebracht:
   - Punkte im Abstand von 1 mm
   - Striche bei vollen Zentimetern
   - Längenangaben alle 5 cm

Zug-E-Modul:
ISO 527 mit einer Zuggeschwindigkeit von 1 mm/min
ISO-Zugstab , Norm: ISO/CD 3167, Typ A1, 170 x 20/10 x 4 mm, Temperatur 23 °C

Wechselbiegefestigkeit:
ISO 178
ISO-Prüfstab, Norm: ISO/CD 3167, Typ B1, 80 x 10 x
4 mm, Temperatur 23 °C

| | |
|---|---|
| 30 - 55 MPa | Auslenkung 3 mm |
| 55 - 70 MPa | Auslenkung 4 mm |

Die Messung der Wechselbiegefestigkeit wurde in der Form von Wöhler Kurven auf einem Gerät der Fa. Dyna Mess, CIMTronic 2000 nach ISO 178 durchgeführt. Die Biegebelastung wird bei festgelegter Auslenkung nach oben und unten wiederholt, dies entspricht einem Zyklus. Angegeben wird die Anzahl der Zyklen bis zum Bruch des Prüfkörpers.

Kugeldruckhärte:
ISO 2039-1
ISO-Zugstab, Norm: ISO/CD 3167, Typ A1, 170 x
20/10 x 4 mm, Temperatur 23 °C

Dichte:

ISO 1183-3
Granulat
Temperatur 23 °C

Spannungsrissbeständigkeit:
DIN 53449
ISO-Zugstab, Norm: ISO/CD 3167, Typ A1, 170 x
20/10 x 4 mm, Temperatur 23 °C
Angegeben wird die Randfaserdehnung (Rfd) bei der Risse mit bloßem Auge sichtbar sind.

Transmission und Haze:
ASTM D 1003-61
Rundplatte, Dicke 2 mm, Radius 37,5 mm
Temperatur 23 °C
Messgerät Haze Gard plus der Firma Byk Gardner mit CIE Lichtart C. Der Lichttransmissions- und der Hazewert werden in % der eingestrahlten Lichtmenge angegeben.

Relative Viskosität:
DIN 53727, in 0,5 %-iger m-Kresollösung
Temperatur 20 °C

Alle Prüfkörper werden im trockenen Zustand verwendet. Dazu werden die Prüfkörper nach dem Spritzguss mindestens 48 h bei Raumtemperatur in trockener Umgebung gelagert.

In Tabelle 1 werden die in den Beispielen verwendeten Monomere charakterisiert.

**Tabelle 1**

| **Monomer** | **Handelsprodukt** | **Anzahl der C-Atome** | **Schmelzpunkt [°C]** | **Hersteller** |
|---|---|---|---|---|
| MACM | Laromin C260 | - | - 7 bis - 1 | BASF AG |
| Dodecandisäure | Dodecandisäure | 12 | 130 | Du Pont |
| Tridecandisäure | DC13 | 13 | 115 - 116 | Cathay Biotechnology Ltd. |
| Tetradecandisäure | DC14 | 14 | 126 - 127 | Cathay Biotechnology Ltd. |
| Oktadecandisäure | DC18 | 18 | 129 | Cognis |

In Tabelle 2 werden die Eigenschaften einer transparenten, amorphen Polyamidformmasse nach der Erfindung, die mit einer C18-Disäure und MACM als Diamin (Beispiel Nr 4) hergestellt worden ist, mit den Eigenschaften entsprechender Polyamidformmassen verglichen, die ebenfalls mit MACM als Diaminkomponente jedoch mit C12- bis C14-Disäure hergestellt worden sind (Beispiele 1 bis 3).

**Tabelle 2**

| **Beispiele** | | | **Nummer** | | | |
|---|---|---|---|---|---|---|
| **Komponenten** | **Bedingung** | **Einheit** | **1** | **2** | **3** | **4** |
| MACM* | - | Mol-% | 50 | 50 | 50 | 50 |
| Dodecandisäure | - | Mol-% | 50 | - | - | - |
| Tridecandisäure | - | Mol-% | - | 50 | - | - |
| Tetradecanedisäure | - | Mol-% | - | - | 50 | - |
| Oktadecandisäure | - | Mol-% | - | - | - | 50 |
| **Tests** | | | | | | |
| Spiralfließtest | ** | mm | 215 | 210 | 205 | 250 |
| Zug-E-Modul | trocken | MPa | 1460 | 1370 | 1340 | 1160 |
| Wechselbiegetest | 30-55 MPa | Zyklen | 230'000 | 260'000 | 400'000 | 650'000 |
| | 56-70 MPa | Zyklen | 50'000 | 45'000 | 50'000 | 80'000 |
| Kugeldruckhärte | trocken, 23°C | MPa | 100 | 96 | 92 | 80 |
| Dichte | 23°C | g/ccm | 1,006 | 1,000 | 0,995 | 0,979 |
| Spannungsriss- | Aceton | Rfd*** in % | 1 | 1 | 1 | 3 |
| beständigkeit | Isopropanol | Rfd*** in % | 1,25 | 1,25 | 1,25 | 4 |
| Lichttransmission | 75 × 2mm | % | 92,7 | 93,0 | 93,3 | 93,3 |
| Haze | 75 × 2 mm | % | 0,70 | 0,65 | 0,59 | 0,53 |
| Relative Viskosität | 0,5 % m-Kresol, 20°C | - | 1,77 | 1,78 | 1,80 | 1,80 |

| | | | | | | |
|---|---|---|---|---|---|---|
| * Bis(3-methyl-4-amino-cyclohexyl)methan ** Massetemperatur 280 °C, Formtemperatur 100 °C *** Randfaserdehnung | | | | | | |

Die Fließfähigkeit im Spiralfließtest der erfindungsgemäßen Polyamidformmassen ist demnach mit 250 mm deutlich besser als dies im Stand der Technik mit 205 bis 215 mm bekannt war. Derart verbesserte Eigenschaften in Bezug auf das Fließverhalten waren für einen Fachmann in keinem Falle vorhersehbar.

Die verbesserte Flexibilität der erfindungsgemäßen Polyamidformmasse zeigt sich im verringerten Zug-E-Modul und in der verringerten Kugeldruckhärte, sowie in der stark erhöhten Wechselbiegefestigkeit der daraus hergestellten Formkörper.

Die mit den erfindungsgemäßen Polyamidformmassen hergestellten Formkörper weisen eine Dichte auf, die unter 0,980 g/cm³ liegt, so dass sich dadurch neue Anwendungsmöglichkeiten ergeben, die beispielsweise eine Schwimmfähigkeit im Süßwasser verlangen. Ferner sind niedrige Dichten in Land-, Wasser- oder Luft-und Raumfahrzeugen von entscheidender Bedeutung.

Die verbesserte chemische Beständigkeit eines Formkörpers, der mit einer erfindungsgemäßen Polyamidformmasse hergestellt worden ist, zeigt sich in seiner sehr guten Spannungsrissbeständigkeit in Aceton und Isopropanol.

Die optischen Eigenschaften, Lichttransmission und Haze sind bei Formkörpern aus einer erfindungsgemäßen Polyamidformmasse ebenfalls deutlich verbessert, wobei die Lichttransmission über 93 % und der Haze unter 0,55 % liegt. Damit können optische Werte erzielt werden, die im Bereich des besten transparenten Kunststoffes PMMA und deutlich oberhalb von Polycarbonat und Polystyrol liegen.

## Patentansprüche

1. Transparente, amorphe Polyamidformmassen, enthaltend durch Polykondensation einer aliphatischen Dicarbonsäure mit einem cycloaliphatischen Diamin gebildete Polyamide, sowie Blends hiervon, sowie Additive und/oder Farbstoffe **dadurch gekennzeichnet, dass**
die aliphatische Dicarbonsäure aus Dicarbonsäuren mit 17 bis 21 C-Atomen ausgewählt und dass das Diamin bis(3-methyl-4-aminocyclohexyl)methan (MACM) ist und dass bei den Additiven Vernetzungsadditive und bei den Farbstoffen photochrome Farbstoffe ausgeschlossen sind.

2. Transparente, amorphe Polyamidformmassen nach Anspruch 1, **dadurch gekennzeichnet, dass** die Dichtet 1,00 g/cm³ ist.

3. Transparente, amorphe Polyamidformmassen nach Anspruch 1 oder 2, **dadurch gekennzeichnet, dass** die Dicarbonsäure durch maximal 50 Mol-% einer aromatischen Dicarbonsäure ersetzt worden ist.

4. Transparente, amorphe Polyamidformmassen nach Anspruch 3, **dadurch gekennzeichnet, dass**
die aromatische Dicarbonsäure ausgewählt ist aus Isophthalsäure, Terephthalsäure und Naphthalindicarbonsäure und/oder deren Mischungen.

5. Transparente, amorphe Polyamidformmassen nach mindestens einem der Ansprüche 1 bis 4, **dadurch gekennzeichnet, dass**
das Diamin durch maximal 50 Mol-% p-bis (aminocyclohexyl)methan ersetzt worden ist.

6. Transparente, amorphe Polyamidformmassen nach mindestens einem der Ansprüche 1 bis 5, **dadurch gekennzeichnet, dass**
sie Additive enthalten.

7. Transparente, amorphe Polyamidformmassen nach Anspruch 6, **dadurch gekennzeichnet, dass**
die Additive ausgewählt sind aus Füllstoffen, Hitzestabilisatoren, UV-Stabilisatoren, weichmachern, Flammschutzmitteln, Pigmenten, Farbstoffen, Schlagzähmodifikatoren und/oder Endgruppenregulierungsverbindungen.

8. Verwendung der transparenten, amorphen Polyamidformmassen nach mindestens einem der Ansprüche 1 bis 7 zur Herstellung von transparenten Formkörpern.

9. Verwendung der transparenten Formkörper nach Anspruch 8 als korrigierende Linsen, nicht korrigierende Linsen Sonnenlinsen, Brillenbügel, Brillenfassungen, Schutzbrillen, Visieren, Schutzhelmen, Lupen, Linsensysteme, Mikroskope, Kameras, Displays, Kameralinsen, Messinstrumente, Uhrengläser, Gehäuse, tragbare Telefone mit oder ohne integrierte Displays CD's, DVD's, Linsen für LED's, Lichtwellenleiter, Lichtkoppler, -Verstärker, Verteiler und Scheiben für Lampen und Lasergeräte, Folien oder Behälter.

## Claims

1. Transparent, amorphous polyamide moulding compounds, containing polyamides formed by polycondensation of an aliphatic dicarboxylic acid with a cycloaliphatic diamine and also blends thereof, and also additives and/or colourants,
**characterised in that**
the aliphatic dicarboxylic acid is selected from dicarboxylic acids with 17 to 21 C atoms and **in that** the diamine is bis(3-methyl-4-aminocyclohexyl)methane (MACM) and **in that** cross-linking additives, in the case of the additives, and photochromic colourants, in the case of the colourants, are precluded.

2. Transparent, amorphous polyamide moulding compounds according to claim 1, **characterised in that** the density is < 1.00 g/cm³.

3. Transparent, amorphous polyamide moulding compounds according to claim 1 or 2, **characterised in that** the dicarboxylic acid has been replaced by at most 50% by mol of an aromatic dicarboxylic acid.

4. Transparent, amorphous polyamide moulding compounds according to claim 3, **characterised in that** the aromatic dicarboxylic acid is selected from isophthalic acid, terephthalic acid and naphthalenedicarboxylic acid and/or mixtures thereof.

5. Transparent, amorphous polyamide moulding compounds according to at least one of the claims 1 to 4, **characterised in that** the diamine has been replaced by at most 50% by mol p-bis(aminocyclohexyl)methane.

6. Transparent, amorphous polyamide moulding compounds according to at least one of the claims 1 to 5, **characterised in that** they contain additives.

7. Transparent, amorphous polyamide moulding compounds according to claim 6, **characterised in that** the additives are selected from fillers, heat stabilisers, UV stabilisers, softeners, flameproofing agents, pigments, colourants, impact modifiers and/or end group regulating compounds.

8. Use of the transparent, amorphous polyamide moulding compounds according to at least one of the claims 1 to 7, for the production of transparent moulded articles.

9. Use of the transparent moulded articles according to claim 8 as correction lenses, non-correction lenses, sunglasses lenses, spectacle bows, spectacle frames, safety glasses, visors, protective helmets, magnifying glasses, lens systems, microscopes, cameras, displays, camera lenses, measuring instruments, watch glass, housings, portable telephones with or without integrated displays, CDs, DVDs, lenses for LEDs, light wave guides, light couplers, light amplifiers, light distributors and discs for lamps and laser appliances, films or containers.

## Revendications

1. Matières à mouler transparentes amorphes de polyamide, contenant des polyamides formés par polycondensation d'un acide dicarboxylique aliphatique avec une diamine cycloaliphatique, ainsi que des mélanges de ceux-ci, ainsi que des additifs et/ou des colorants, **caractérisées en ce que**
l'acide dicarboxylique aliphatique est choisi parmi les acides dicarboxyliques avec 17 à 21 atomes de carbone et **en ce que** la diamine est du bis(3-méthyl-4-aminocyclohexyl)méthane (MACM), et **en ce que** parmi les additifs sont exclus les additifs réticulants et parmi les colorants, les colorants photochromes.

2. Matières à mouler transparentes amorphes de polyamide selon la revendication 1, **caractérisées en ce que** la densité est <1,00 g/cm³.

3. Matières à mouler transparentes amorphes de polyamide selon la revendication 1 ou 2, **caractérisées en ce que** l'acide dicarboxylique a été remplacé par 50 % en mole au plus d'un acide dicarboxylique aromatique.

4. Matières à mouler transparentes amorphes de polyamide selon la revendication 3, **caractérisées en ce que** l'acide dicarboxylique aromatique est choisi parmi l'acide isophtalique, l'acide téréphtalique et l'acide naphtalène dicarboxylique et/ou parmi leurs mélanges.

5. Matières à mouler transparentes amorphes de polyamide selon au moins l'une quelconque des revendications 1 à 4, **caractérisées en ce que** la diamine a été remplacée par 50 % en mole au plus de p-bis(aminocyclohexyl)méthane.

6. Matières à mouler transparentes amorphes de polyamide selon au moins l'une quelconque des revendications 1 à 5, **caractérisées en ce qu'**elles contiennent des additifs.

7. Matières à mouler transparentes amorphes de polyamide selon la revendication 6, **caractérisées en ce que** les additifs sont choisis parmi des charges, des stabilisants thermiques, des stabilisants aux UV, des plastifiants, des ignifugeants, des pigments, des colorants, des modificateurs de résilience et/ou des composés régulateurs de groupes finaux.

8. Utilisation des matières à mouler transparentes amorphes de polyamide selon au moins l'une des revendications 1 à 7 à la fabrication de corps moulés transparents.

9. Utilisation de corps moulés transparents selon la revendication 8 comme lentilles correctrices, lentilles non correctrices, lentilles de soleil, branches de lunettes, montures de lunettes, lunettes de protection, collimateurs, casques de protection, loupes, systèmes de lentilles, microscopes, appareils photo/caméras, afficheurs, lentilles d'appareils photo/de caméras, instruments de mesure, verres de montre, boîtiers, téléphones portables avec ou sans afficheur intégré, CD, DVD, lentilles pour DEL, fibres optiques, coupleurs optiques, amplificateurs de lumière, distributeurs et vitres pour des lampes et des appareils à laser, films ou récipients.
